# EUROPEAN PATENT SPECIFICATION

(11) **EP 3 416 336 B1**
(45) Date of publication and mention of the grant of the patent: **03.01.2024**
(21) Application number: 18175135.5
(22) Date of filing: 30.05.2018
(51) Int. Cl.: G06N 20/00, H04W 40/18, H04L 41/12, H04L 41/14, H04L 41/5041, H04L 45/00, H04L 41/16, H04L 41/5051, H04L 41/147, H04L 43/08

(54) **NETWORK PATH PREDICTION AND SELECTION USING MACHINE LEARNING**
NETZWERKWEGVORHERSAGE UND -AUSWAHL MITHILFE VON MASCHINELLEM LERNEN
SÉLECTION ET PRÉDICTION DE TRAJET DE RÉSEAU À L'AIDE D'APPRENTISSAGE MACHINE

(30) Priority: 12.06.2017 US 201715620247
(43) Date of publication of application: 19.12.2018
(73) Proprietor: Juniper Networks, Inc., Sunnyvale, CA 94089 (US)
(72) Inventor: YADAV, Alam, 560043 Bangalore (IN)
(74) Representative: D Young & Co LLP

(56) References cited:
- EP-A1- 2 469 757
- WO-A1-2013/144550
- WO-A1-2015/175260
- US-A1- 2016 057 041

## Description

### BACKGROUND

A network administration device may identify a shortest path for network traffic via a set of network devices (e.g., based on distance, throughput, latency, and/or the like). The network administration device may use a metric-driven approach that may be predefined based on a static configuration of the set of network devices (e.g., a network topology and/or the like). In some cases, the network traffic may be associated with a service level agreement (SLA), which may identify a latency, reliability, and/or throughput requirement for the network traffic. WO2015/175260 describes that network traffic data is received regarding traffic flowing through one or more routers in a network. A future traffic profile through the one or more routers is predicted by modeling the network traffic data. Network condition data for the network is received and future network performance is predicted by modeling the network condition data. A behavior of the network is adjusted based on the predicted future traffic profile and on the predicted network performance. WO2013/144550A1 relates to a session admission process which identifies the weakest link in a route between a first node and a second node and determines if the route is able to cope if the session is admitted. The suitability of a link is determined on the basis of: historical link performance; the predicted future performance of the link; and the predicted future demands on the link from other sessions supported by that link.

### SUMMARY

Particular aspects and embodiments are set out in the appended independent and dependent claims.

A method may include receiving, by a network administration device, operational information regarding a plurality of network devices, the operational information including information identifying drops, delays, throughput statistics, a queue length, resource allocation, input rate and/or output rate for one or more network devices; receiving, by the network administration device, flow information relating to a traffic flow that is transmitted or received via at least one network device of the plurality of network devices; inputting, by the network administration device, the operational information and the flow information to a path selection model, where the path selection model is generated based on a machine learning technique, and where the path selection model is configured to identify predicted performance of the plurality of network devices with regard to the traffic flow based on the operational information and the flow information; determining, by the network administration device, path information for the traffic flow with regard to the plurality of network devices based on the predicted performance of the plurality of network devices, wherein the path information identifies an updated path for the traffic flow using the path selection model and based on the predicted performance information; and/or configuring, by the network administration device, one or more of the plurality of network devices to implement the updated path for the traffic flow.

A network administration device may include one or more processors to receive operational information regarding a plurality of network devices, the operational information including information identifying drops, delays, throughput statistics, a queue length, resource allocation, input rate and/or output rate for one or more network devices; receive flow information relating to at least one traffic flow that is transmitted or received or received via at least one network device of the plurality of network devices; input the flow information to a path selection model, where the path selection model is generated based on a machine learning technique, and where the path selection model is configured to identify predicted performance information of one or more network devices with regard to the at least one traffic flow based on the operational information; determine path information for the at least one traffic flow with regard to the one or more network devices based on the predicted performance information, wherein the path information identifies an updated path for the traffic flow using the path selection model and based on the predicted performance information; and/or configure the one or more network devices to implement the path information for the traffic flow.

### BRIEF DESCRIPTION OF THE DRAWINGS

Figs. 1A-1D are diagrams of an overview of example implementations described herein;
Fig. 2 is a diagram of an example environment in which systems and/or methods, described herein, may be implemented;
Fig. 3 is a diagram of example components of one or more devices of Fig. 2;
Fig. 4 is another diagram of example components of one or more devices of Fig. 2;
Fig. 5 is a flow chart of an example process for generating a model for path determination using a machine learning algorithm, and determining paths for traffic using the model; and
Fig. 6 is a diagram of an example of inputs and outputs of a predictive path computation function such as implementations described herein.

### DETAILED DESCRIPTION

The following detailed description of example implementations refers to the accompanying drawings. The same reference numbers in different drawings may identify the same or similar elements.

A routing protocol may identify rules and/or conditions for routing traffic in a network. For example, the routing protocol may identify particular hops or paths to be used with regard to particular network traffic based on metrics associated with network devices of the network. In some cases, the routing protocol may be based on predefined information, such as a predefined network topology, and/or the like. For example, when a network device or link of a network fails, the routing protocol may indicate alternative paths for traffic flowing via the failed network device or link.

However, predefined routing protocols may have disadvantages in practice. For example, in some cases, a particular network device or link may not report a failure to the network administrator device or to peer routers. A lack of routing updates may mean that the network topology is not updated to account for such failures, and traffic may be lost as a result. Loss of traffic due to an unreported hardware fault or configuration fault may be referred to as black-holing. As another example, network topology is likely to change over time (e.g., based on activation or deactivation of network devices, changes in configuration of network devices, and/or the like), which may lead to an obsolete or sub-optimal routing protocol. Still further, traffic latency has become a significant quality criterion due to low-latency applications, and current routing protocol-based schemes that are based on a static configuration may not adapt to changing latency due to unpredictable traffic congestion. The unpredictable traffic congestion, in combination with SLAs for different priority levels of traffic, may lead to increased drop rates of low-priority traffic. Furthermore, network traffic is dynamic and can be bursty in nature, which can result in points of congestion in the network. Congestion can result in unexpected buildup of queues and result in higher latencies, jitter, and even packet drops for lower priority traffic.

Some implementations described herein use a machine-learning based solution to identify paths for traffic flows with regard to a set of network devices. For example, some implementations described herein may train a model using a machine learning technique. The model may be trained based on observed operational information (e.g., telemetry data and/or the like) for a set of network devices and based on flow information for traffic flows associated with the set of network devices. The model may output predicted performance information for the set of network devices based on input information identifying traffic flows and/or operational information. Some implementations described herein may use the model to determine path information for a network, and may implement the path information in the network (e.g., may cause a particular path in the network to be formed, used, etc.).

Furthermore, some implementations described herein may update the model using the machine learning technique and based on observations regarding efficacy of the configuration of the path information. In this way, the model may adapt to changing network conditions and topology (e.g., in real time as the network conditions and/or the topology change), which may require human intervention for a predefined routing policy. Thus, network throughput, reliability, and conformance with SLAs is improved. Further, some implementations described herein may use a rigorous, well-defined approach to path selection, which may reduce uncertainty, subjectivity, and inefficiency that may be introduced by a human actor attempting to define a routing policy based on observations regarding network performance.

Also, some implementations described herein may identify the best paths for traffic associated with different SLAs. Since these best paths may iteratively change based on traffic load and node behavior/faults, the machine learning component of implementations described herein may regularly reprogram the paths for particular traffic flows across the network domain. This reprogramming may be based on dynamic prediction of the traffic flows, traffic drops and delays. Thus, implementations described herein may improve adaptability and versatility of path computation for the network domain in comparison to a rigidly defined routing protocol.

Furthermore, by using machine learning, implementations described herein may predict traffic delay or traffic drops or reduced capacity on network devices, and may perform pre-emptive routing updates to avoid traffic drops due to node degradation. Thus, forward-looking maintenance and routing is provided, which further improves network reliability and performance.

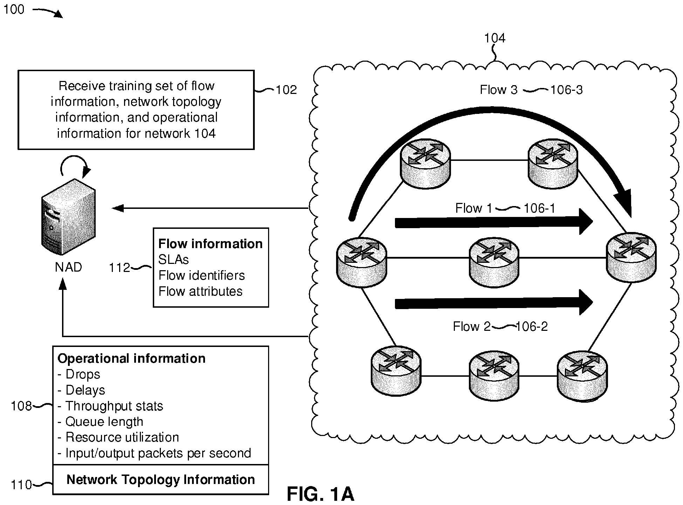

Figs. 1A-1D are diagrams of an overview of example implementations 100 described herein. As shown in Fig. 1A, and by reference number 102, a network administration device (shown as NAD) may receive a training set of flow information, network topology information, and operational information regarding a plurality of network devices of a network. The network administration device may receive the flow information, the network topology information, and the operational information to generate a model for determining traffic flow paths in the network or another network.

As shown by reference number 104, the plurality of network devices may be associated with a set of traffic flows. For example, the traffic flows may include flow 1 (shown by reference number 106-1), flow 2 (shown by reference number 106-2), and flow 3 (shown by reference number 106-3). In some implementations, one or more of the traffic flows may be associated with a service level agreement, which may identify a latency requirement, a throughput requirement, a reliability requirement, and/or the like. Here, flows 1 and 2 are associated with a shortest path, flow 3 is associated with a path that is longer than the shortest path, and a longest path (via the network devices shown at the bottom of Fig. 1A) is unused.

As shown by reference number 108, in some implementations, the operational information may include information identifying drops (e.g., dropped traffic associated with the network), delays (e.g., delayed traffic or traffic not meeting a latency SLA), throughput statistics (e.g., information relating to a throughput of a network device of the network), a queue length (e.g., a quantity of packets or traffic queued at a network device), resource allocation (e.g., allocation of hardware, software, or other resources of a network device), input rate and/or output rate for one or more network devices, and/or the like.

As shown by reference number 110, in some implementations, the network topology information may identify a pattern in which network devices are connected within the network via links. For example, the network topology information may indicate a type of topology (e.g., bus, ring, star, mesh, and/or the like), capabilities of network devices and/or links, configurations of network devices and/or links, and/or the like.

As shown by reference number 112, the flow information may identify SLAs associated with a traffic flow, a flow identifier (e.g., based on a class of the traffic flow, a source and/or destination of the traffic flow, a traffic type of the traffic flow, and/or the like), one or more flow attributes (e.g., a throughput, a type of link required to carry the traffic, a pattern associated with the traffic flow, a flow duration, and/or the like), and/or the like.

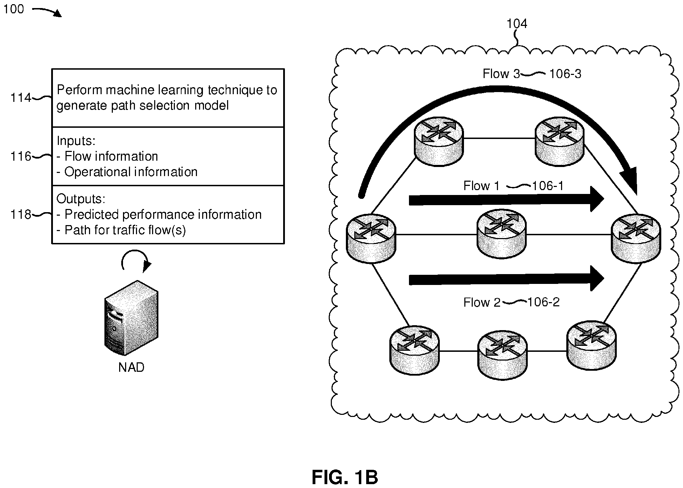

As shown in Fig. 1B, and by reference number 114, the network administration device may perform a machine learning technique to generate a path selection model. In some implementations, the network administration device may perform a supervised learning technique and/or the like to generate the path selection model. The generation of the path selection model is described in more detail elsewhere herein.

As shown by reference number 116, the path selection model may receive, as input, flow information and operational information. For example, the network administration device may receive or obtain the flow information and the operational information, and may input the flow information and the operational information to the path selection model.

As shown by reference number 118, the path selection model may output predicted performance information and/or information identifying one or more paths for one or more traffic flows associated with the network. For example, the path selection model may identify a set of links and/or hops for a traffic flow. Additionally, or alternatively, the path selection model may output predicted performance information identifying a predicted throughput, latency, and/or reliability of one or more traffic flows. Additionally, or alternatively, the path selection model may output additional or different information, as described in more detail elsewhere herein.

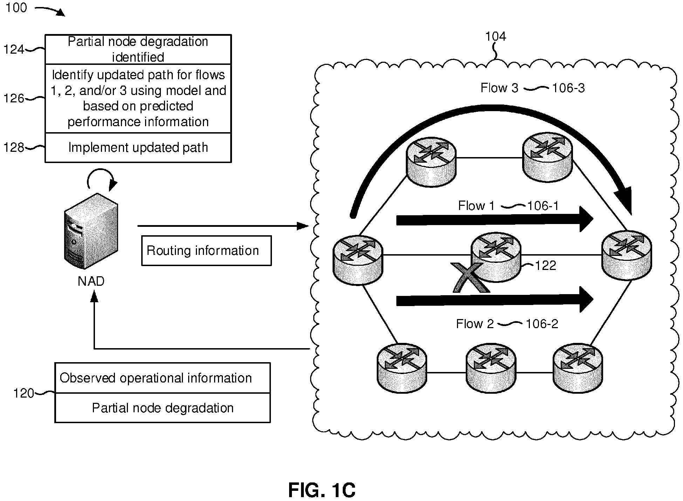

As shown in Fig. 1C, and by reference number 120, the network administration device may receive or obtain observed operational information regarding the network. For example, and as shown, the observed operational information may indicate a network device degradation, such as a partial node degradation of one of the network devices. The partial node degradation may include, for example, a reduced capacity of a network device, an unexpected or unusual queue at a network device, a black-holing event at the network device, an outage associated with the network device, and/or the like. In a case where the degradation is associated with an outage or black-holing event, the network administration device may attempt to avoid or limit traffic drops due to misbehaving network nodes or devices by detecting any routers or switches that are black-holing traffic and bypassing them, as described in more detail below. As shown by reference number 122, the network device degradation may be associated with a central network device associated with flow 1 and flow 2.

As shown by reference number 124, the network administration device may identify the network device degradation based on the observed operational information. In some implementations, the observed operational information may identify the network device degradation (e.g., the central network device or a network device in communication with the central network device may report the network device degradation). Additionally, or alternatively, the network administration device may identify the network device degradation based on information associated with devices other than the central network device. For example, the network administration device may identify the network device degradation based on identifying an increasing queue size at a network device upstream from the central network device, or based on identifying a device downstream from the central network device that is not receiving network traffic from the central network device.

In some implementations, based on the received or observed operational information, the network administration device may predict traffic delay or traffic drops or reduced capacity on one or more of the network devices. For example, the machine learning aspects of the network administration device may enable such forward-looking analysis. In some implementations, the network administration device may perform pre-emptive routing updates to avoid traffic drops due to node degradation based on the predicted traffic delay, traffic drops, or reduced capacity. This enables forward-looking routing adjustment based on advance markers such as queue lengths or traffic delay.

As shown by reference number 126, the network administration device may identify an updated path for flows 1, 2, and/or 3 using the path selection model and based on the predicted performance information. The updated path may identify one or more routes for flows 1, 2, and/or 3 that do not include the central network device associated with the network device degradation. In some implementations, the network administration device may identify an updated path based on SLAs associated with flows 1, 2, and/or 3 and based on the path selection model. For example, the network administration device may identify a distribution of traffic and/or traffic flows that maximizes satisfaction of SLAs based on predicted performance information outputted by the path selection model.

As shown by reference number 128, the network administration device may implement the updated path. For example, and as shown, the network administration device may provide path computation information to the network devices of the network to cause the network devices of the network to implement the updated path. In some implementations, the network administration device may use a particular protocol, such as the path computation element protocol (PCEP), to implement the updated path.

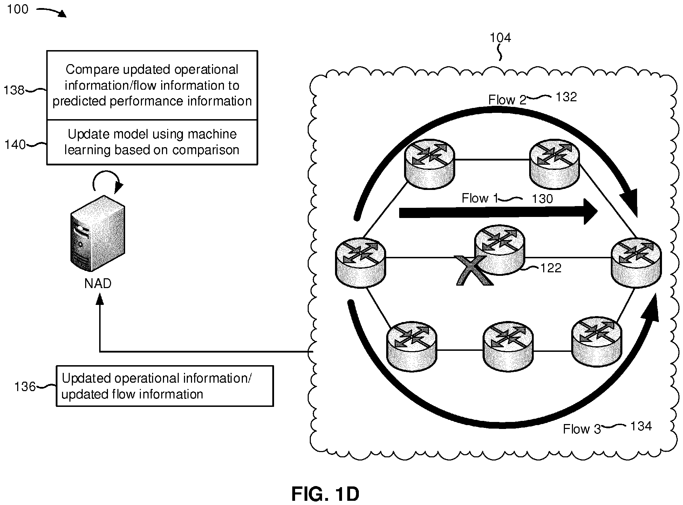

As shown in Fig. 1D, and by reference number 130, after the updated path is implemented, flow 1 may continue to be routed via the network device associated with the degradation. For example, the network administration device may determine that the network device associated with the degradation still has sufficient capacity to carry flow 1, and may accordingly route flow 1 via the network device. In this way, impact of the degradation is lessened using a machine-learning based approach, and routing efficiency in the case of degradations, blackholing, and similar events is improved.

As shown by reference number 132, flow 2 may be routed via the set of network devices shown at the top of Fig. 1D that were originally used to provide flow 3. As further shown, flow 3 may be routed via the previously unused set of network devices shown at the bottom of Fig. 1D. For example, flow 2 and flow 3 may be rerouted based on predictions regarding traffic and/or performance associated with the paths to which flow 2 and flow 3 are to be rerouted, as well as based on predictions regarding traffic and/or performance associated with the path on which flow 1 is routed. Thus, the network administration device may train a predictive model (e.g., the path selection model) and may use the predictive model to identify a best path for traffic flows in a network.

As shown by reference number 136, the network administration device may receive updated operational information and/or updated flow information for the network. For example, the updated operational information and/or the updated flow information may relate to the network after the updated path is implemented. As more particular examples, the updated operational information and/or the updated flow information may identify performance of the network when using the updated path information.

As shown by reference number 138, the network administration device may compare the updated operational information and/or the updated flow information to the predicted performance information outputted by the path selection model. As shown by reference number 140, the network administration device may update the path selection model using machine learning and based on the comparison of the updated operational information and/or the updated flow information to the predicted performance information. For example, machine learning may provide a mechanism for dynamically or iteratively improving the path selection model in view of results of using the path selection model. When observed results deviate from predicted results, the network administration device may adjust the path selection model using a machine learning algorithm to improve accuracy of the predicted results to better match the observed results.

In this way, the network administration device generates a predictive model using machine learning to determine updated path information for a network of network devices, which permits dynamic improvement and updating of the predictive model, and which may be simpler to implement than a complicated and/or static routing protocol. Furthermore, using a machine learning technique may generate a more efficient routing protocol than using a human-based technique. Further, the network administration device may avoid or limit traffic drops due to black-holing of traffic by misconfigured or malfunctioning network devices. This may be particularly advantageous for failure modes that are not detected by traditional routing protocols, such as network device degradation, black-holing, and/or the like. Also, the network administration device may continuously gather useful telemetry and/or performance information over time, which may permit analysis of network information over time.

In this way, traffic engineering is improved by using the lowest latency paths for latency sensitive traffic. Further, network efficiency and distribution of traffic are improved based on dynamic load balancing. Still further, the network administration device may adapt dynamically or automatically to network changes, and may provide better visibility into dynamic network behavior by logging the continuous measurements and congestions. These collected or logged data can be used for offline data analytics to design and improve the networks themselves.

As indicated above, Figs. 1A-1D are provided merely as an example. Other examples are possible and may differ from what was described with regard to Figs. 1A-1D.

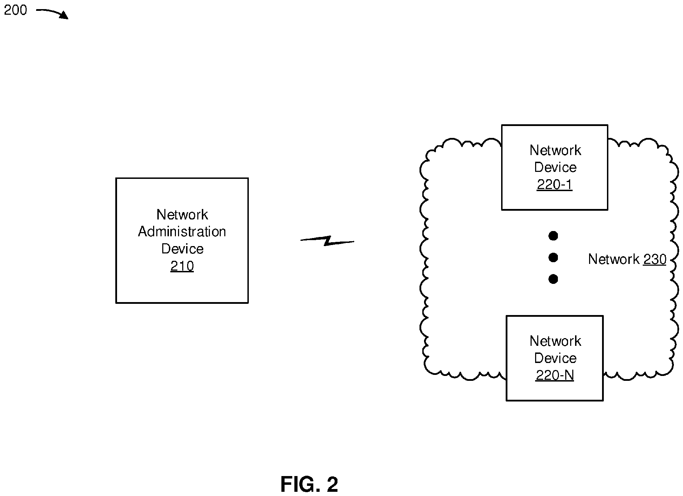

Fig. 2 is a diagram of an example environment 200 in which systems and/or methods, described herein, may be implemented. As shown in Fig. 2, environment 200 may include network administration device 210, one or more network devices 220-1 through 220-N (N > 1) (hereinafter referred to collectively as "network devices 220" and individually as "network device 220"), and network 230. Devices of environment 200 may interconnect via wired connections, wireless connections, or a combination of wired and wireless connections.

Network administration device 210 includes one or more devices capable of managing or administrating routing of network traffic by network devices 220. For example, network administration device 210 may include a network controller (e.g., a centralized external controller, a software-defined networking controller, etc.), a self-organizing network or self-optimizing network, one or more devices of a network operations center, a user device, a path computation element, a server device, a user device, a hub, a load balancer, or a similar device. In some implementations, network administration device 210 may be a centralized device (e.g., may be associated with a single device or cluster of devices). In some implementations, network administration device 210 may be implemented on two or more distributed devices. For example, network administration device 210 may be deployed as part of a cloud environment, a software-defined network, and/or the like. In some implementations, network administration device 210 may be implemented on one or more network devices 220.

Network device 220 includes one or more devices (e.g., one or more traffic transfer devices) capable of processing and/or transferring traffic between endpoint devices (not shown). For example, network device 220 may include a firewall, a router, a gateway, a switch, a hub, a bridge, a reverse proxy, a server (e.g., a proxy server), a security device, an intrusion detection device, a load balancer, or a similar device. In some implementations, network device 220 may be implemented within a physical housing, such as a chassis. In some implementations, network device 220 may be a virtual device implemented by one or more computer devices of a cloud computing environment or a data center.

Network 230 includes one or more wired and/or wireless networks. For example, network 230 may include a cellular network (e.g., a long-term evolution (LTE) network, a code division multiple access (CDMA) network, a 3G network, a 4G network, a 5G network, another type of next generation network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

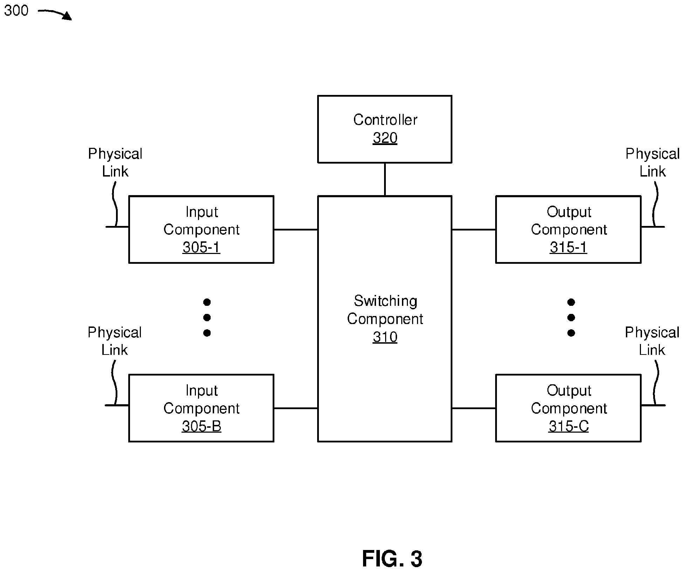

Fig. 3 is a diagram of example components of a device 300. Device 300 may correspond to network device 220. In some implementations, network device 220 may include one or more devices 300 and/or one or more components of device 300. As shown in Fig. 3, device 300 may include one or more input components 305-1 through 305-B (B > 1) (hereinafter referred to collectively as input components 305, and individually as input component 305), a switching component 310, one or more output components 315-1 through 315-C (C ≥ 1) (hereinafter referred to collectively as output components 315, and individually as output component 315), and a controller 320.

Input component 305 may be points of attachment for physical links and may be points of entry for incoming traffic, such as packets. Input component 305 may process incoming traffic, such as by performing data link layer encapsulation or decapsulation. In some implementations, input component 305 may send and/or receive packets. In some implementations, input component 305 may include an input line card that includes one or more packet processing components (e.g., in the form of integrated circuits), such as one or more interface cards (IFCs), packet forwarding components, line card controller components, input ports, processors, memories, and/or input queues. In some implementations, device 300 may include one or more input components 305.

Switching component 310 may interconnect input components 305 with output components 315. In some implementations, switching component 310 may be implemented via one or more crossbars, via busses, and/or with shared memories. The shared memories may act as temporary buffers to store packets from input components 305 before the packets are eventually scheduled for delivery to output components 315. In some implementations, switching component 310 may enable input components 305, output components 315, and/or controller 320 to communicate.

Output component 315 may store packets and may schedule packets for transmission on output physical links. Output component 315 may support data link layer encapsulation or decapsulation, and/or a variety of higher-level protocols. In some implementations, output component 315 may send packets and/or receive packets. In some implementations, output component 315 may include an output line card that includes one or more packet processing components (e.g., in the form of integrated circuits), such as one or more IFCs, packet forwarding components, line card controller components, output ports, processors, memories, and/or output queues. In some implementations, device 300 may include one or more output components 315. In some implementations, input component 305 and output component 315 may be implemented by the same set of components (e.g., and input/output component may be a combination of input component 305 and output component 315).

Controller 320 includes a processor in the form of, for example, a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processor that can interpret and/or execute instructions. The processor is implemented in hardware, firmware, or a combination of hardware and software. In some implementations, controller 320 may include one or more processors that can be programmed to perform a function.

In some implementations, controller 320 may include a random access memory (RAM), a read only memory (ROM), and/or another type of dynamic or static storage device (e.g., a flash memory, a magnetic memory, an optical memory, etc.) that stores information and/or instructions for use by controller 320.

In some implementations, controller 320 may communicate with other devices, networks, and/or systems connected to device 300 to exchange information regarding network topology. Controller 320 may create routing tables based on the network topology information, create forwarding tables based on the routing tables, and forward the forwarding tables to input components 305 and/or output components 315. Input components 305 and/or output components 315 may use the forwarding tables to perform route lookups for incoming and/or outgoing packets.

Controller 320 may perform one or more processes described herein. Controller 320 may perform these processes in response to executing software instructions stored by or carried by a computer-readable medium. A computer readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Software instructions may be read into a memory and/or storage component associated with controller 320 from another computer-readable medium or from another device via a communication interface. When executed, software instructions stored in a memory and/or storage component associated with controller 320 may cause controller 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

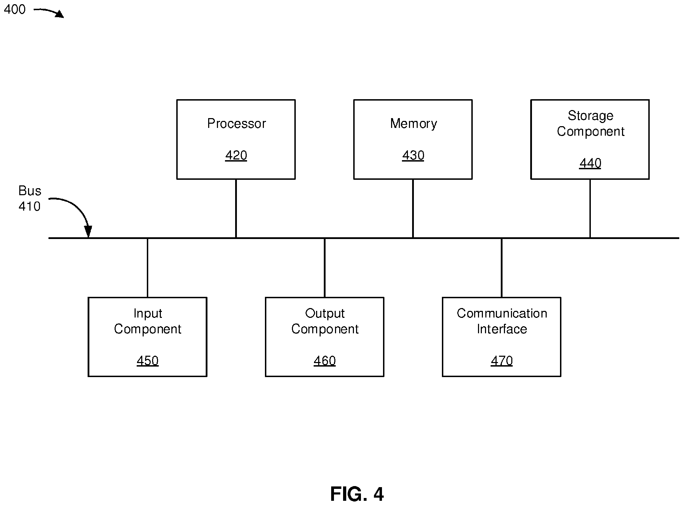

Fig. 4 is a diagram of example components of a device 400. Device 400 may correspond to network administration device 210. In some implementations, network administration device 210 may include one or more devices 400 and/or one or more components of device 400. As shown in Fig. 4, device 400 may include a bus 410, a processor 420, a memory 430, a storage component 440, an input component 450, an output component 460, and a communication interface 470.

Bus 410 includes a component that permits communication among the components of device 400. Processor 420 is implemented in hardware, firmware, or a combination of hardware and software. Processor 420 takes the form of a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, processor 420 includes one or more processors capable of being programmed to perform a function. Memory 430 includes a random access memory (RAM), a read only memory (ROM), and/or another type of dynamic or static storage device (e.g., a flash memory, a magnetic memory, and/or an optical memory) that stores information and/or instructions for use by processor 420.

Storage component 440 stores information and/or software related to the operation and use of device 400. For example, storage component 440 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of a computer-readable medium, along with a corresponding drive.

Input component 450 includes a component that permits device 400 to receive information, such as via user input (e.g., a touch screen display, a keyboard, a keypad, a mouse, a button, a switch, and/or a microphone). Additionally, or alternatively, input component 450 may include a sensor for sensing information (e.g., a global positioning system (GPS) component, an accelerometer, a gyroscope, and/or an actuator). Output component 460 includes a component that provides output information from device 400 (e.g., a display, a speaker, and/or one or more light-emitting diodes (LEDs)).

Communication interface 470 includes a transceiver-like component (e.g., a transceiver and/or a separate receiver and transmitter) that enables device 400 to communicate with other devices, such as via a wired connection, a wireless connection, or a combination of wired and wireless connections. Communication interface 470 may permit device 400 to receive information from another device and/or provide information to another device. For example, communication interface 470 may include an Ethernet interface, an optical interface, a coaxial interface, an infrared interface, a radio frequency (RF) interface, a universal serial bus (USB) interface, a Wi-Fi interface, a cellular network interface, or the like.

Device 400 may perform one or more processes described herein. Device 400 may perform these processes in response to processor 420 executing software instructions stored by a computer-readable medium, such as memory 430 and/or storage component 440. A computer-readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Software instructions may be read into memory 430 and/or storage component 440 from another computer-readable medium or from another device via communication interface 470. When executed, software instructions stored in memory 430 and/or storage component 440 may cause processor 420 to perform one or more processes described herein. Additionally, or alternatively, hardwired circuitry may be used in place of or in combination with software instructions to perform one or more processes described herein. Thus, implementations described herein arc not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

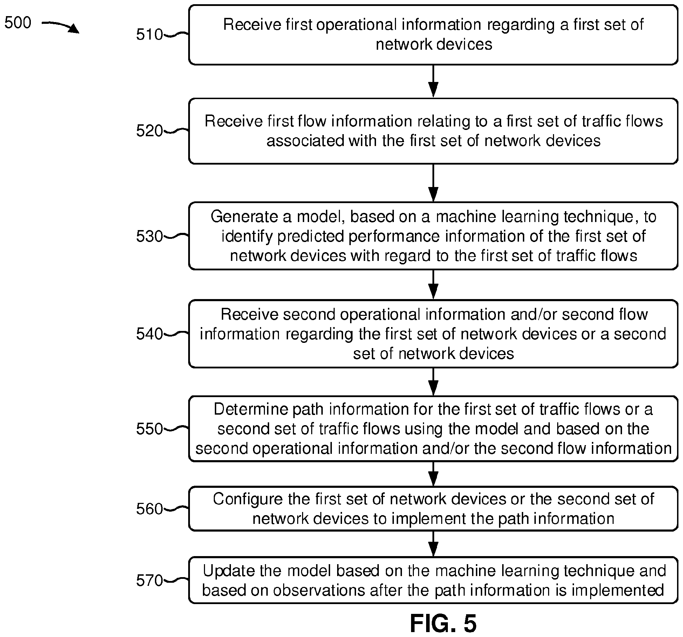

Fig. 5 is a flow chart of an example process 500 for generating a model for path determination using a machine learning algorithm, and determining paths for traffic using the model. In some implementations, process 500 may be performed by network administration device 210. In some implementations, process 500 may be performed by another device of environment 200 separate from or including network administration device 210, such as network device 220 and/or the like.

As shown in Fig. 5, process 500 may include receiving first operational information regarding a first set of network devices (block 510). For example, network administration device 210 may receive first operational information regarding a first set of network devices 220. In some implementations, the first set of network devices 220 may be associated with a particular network. For example, the first set of network devices 220 may be associated with a network to be administrated by network administration device 210. Network administration device 210 may receive the first operational information to train or generate a model for predicting network performance or determining a path for network traffic associated with the first set of network devices 220 or a second set of network devices 220, as described in more detail below.

In some implementations, the first operational information may include topology or static characteristics of the first set of network devices 220. For example, the first operational information may identify capacities of the first set of network devices 220, links between the first set of network devices 220, latency capabilities of the first set of network devices 220, reliability information for the first set of network devices 220, physical locations of the first set of network devices 220, redundancy information for the first set of network devices 220, groupings of the first set of network devices 220 (e.g., redundancy groups, groups based on physical locations, etc.), operational limits of the first set of network devices 220 (e.g., temperature, capacity, throughput, data types, etc.), and/or any other information that could be useful for generating a model for predicting performance of the set of network devices 220.

In some implementations, network administration device 210 may receive the first operational information from network device 220. For example, network device 220 may provide telemetry data regarding performance of network device 220 (e.g., a number of traffic drops, a traffic delay, a throughput statistic, a queue length, a resource utilization, an ingress and/or egress packets per second rate, and/or the like). Additionally, or alternatively, network device 220 may provide information identifying a configuration of network device 220 based on a protocol for configuration of networks and/or network devices 220. Additionally, or alternatively, network device 220 may provide information identifying an operational state of network device 220 (e.g., operational at full capacity, operational at diminished capacity, non-operational, etc.). Additionally, or alternatively, network device 220 may provide information identifying a fault condition associated with network device 220.

In some implementations, network administration device 210 may receive the first operational information from an entity associated with network device 220. For example, the entity may provide the first operational information as part of a training set of operational information and/or flow information for the first set of network devices 220. In such a case, the entity may be associated with a supervised learning technique. For example, the entity may be an administrator or network technician associated with the first set of network devices 220, and the first operational information may be historical operational information for the first set of network devices 220.

As further shown in Fig. 5, process 500 may include receiving first flow information relating to a first set of traffic flows associated with the first set of network devices (block 520). For example, network administration device 210 may receive first flow information associated with the first set of network devices 220. The first flow information may include information relating to one or more traffic flows that are transmitted or received via the first set of network devices 220. Network administration device 210 may use the first operational information and the first flow information to train a predictive model to identify predicted performance information based on operational information and flow information. For example, the predictive model may receive operational information and flow information, and may output information regarding one or more performance indicators based on the operational information, the flow information, and the predictive model.

In some implementations, the flow information may include information identifying a traffic flow. For example, the flow information may include information identifying a class of service (CoS) associated with the traffic flow, a source and/or destination of the traffic flow, one or more entities associated with the traffic flow, a data type of the traffic flow, a service associated with the traffic flow, and/or the like. Additionally, or alternatively, the flow information may include information identifying a SLA associated with a traffic flow. For example, the flow information may identify the SLA, may identify a latency requirement, may identify a throughput requirement, may identify a reliability requirement, and/or the like.

In some implementations, network administration device 210 may receive the first flow information from network device 220. For example, network device 220 may provide information identifying traffic flows that are routed via network device 220. In some implementations, network administration device 210 may receive the first flow information from an entity associated with network device 220. For example, the entity may provide the first flow information as part of a training set of operational information and/or flow information for the first set of network devices 220. In such a case, the entity may be associated with a supervised learning technique. For example, the entity may be an administrator or network technician associated with the first set of network devices 220, and the first flow information may be historical flow information for the first set of network devices 220.

In some implementations, network administration device 210 may receive performance information associated with the first operational information and/or first flow information. For example, the performance information may identify performance indicators associated with the first set of network devices 220, such as a queue length, a resource utilization measurement, a per-flow packet rate (e.g., packets per second and/or the like), and/or the like. In some implementations, and as shown in Figs. 1A-1D, the performance information may be included in the first operational information. Additionally, or alternatively, network administration device 210 may receive the performance information separately from the first operational information. For example, network administration device 210 may obtain the first operational information from a network administrator or another entity with knowledge of the configuration of the first set of network devices 220, and network administration device 210 may receive the performance information from the first set of network devices 220.

As further shown in Fig. 5, process 500 may include generating a model, based on a machine learning technique, to identify predicted performance information of the first set of network devices with regard to the first set of traffic flows (block 530). For example, network administration device 210 may generate a model based on the first operational information, the first flow information, and/or the performance information associated with the first set of network devices 220. In some implementations, network administration device 210 may generate the model using a machine learning technique. In some implementations, the model may output predicted performance information based on input operational information and/or flow information. Additionally, or alternatively, the model may provide information identifying an updated path for one or more traffic flows based on the input operational information and/or flow information. Additionally, or alternatively, network administration device 210 may use predicted performance information for multiple, different potential paths to identify a selected path for one or more traffic flows, as described in more detail below.

In some implementations, network administration device 210 may generate the model using a machine learning technique. Machine learning is a technique for generating an algorithm to predict an output based on an input training set and based on identifying relationships between elements of the input training set. For example, a machine learning technique may identify relationships between historical input information and historical outcomes corresponding to the historical input information, and the model may be generated based on the relationships. In such a case, the model can be used with new input information to identify predicted outcomes corresponding to the new input information. Examples of machine learning techniques include decision tree learning, association rule learning, artificial neural networks, deep learning, support vector machines, genetic algorithms, and rule-based machine learning. In some implementations, machine learning may also be used to update an existing model, as described in more detail below.

One advantage to using machine learning is that many alternatives to machine learning may require complex software using heuristics and thresholds to implement the processes described herein. Despite their complexity, the efficiency and accuracy of such alternatives may not compare with machine learning functions, which use multivariate polynomic functions, derivatives, and/or other mathematical functions to determine optimal prediction functions.

In some implementations, network administration device 210 may perform a supervised learning technique. A supervised learning technique may use an input data set (e.g., a data set of operational information, flow information, and/or performance information) to generate a model, and may refine or update the model based on feedback from a supervisor. For example, the supervisor may configure or fine-tune particular rules or relationships of the model, may provide information indicating whether an output of the model is accurate, and/or the like. Supervised learning may permit the supervisor to contribute background knowledge or systemic knowledge regarding the first set of network devices 220, which may improve accuracy of the model. In some implementations, network administration device 210 may perform an unsupervised machine learning technique, which may not use inputs of a supervisor to train or refine a model. In this way, inherent biases or inefficiencies introduced by the supervisor may be avoided, and the model may be trained or refined in situations where no supervisor is involved.

In some implementations, the model may receive operational information and/or flow information as input. The model may output predicted performance information based on the operational information and/or flow information. For example, the model may output information identifying one or more predicted values of performance indicators for a particular set of network devices 220, a particular traffic flow, and/or a particular path via the set of network devices 220, as described in more detail in connection with blocks 540 and 550, below.

In some implementations, the model may be associated with a prediction function. The prediction function may receive the operational information and/or flow information, and may output predicted performance information. In some implementations, the model may be associated with an error function or cost function, which may identify costs or weights to be assigned to deviations between predicted performance information and observed performance information. In some implementations, the model may be associated with a function for determining a difference between predicted performance information and observed performance information, such as a squared error function and/or the like. In some implementations, the model may be associated with a method of estimating and tuning parameters of the prediction function based on the costs or weights and the difference between predicted performance information and observed performance information. For example, the method of estimating and tuning parameters may include a gradient descent function and/or the like. Network administration device 210 may use the above functions and methods to train and update the model, as described in more detail below.

As further shown in Fig. 5, process 500 may include receiving second operational information and/or second flow information regarding the first set of network devices or a second set of network devices (block 540). For example, network administration device 210 may receive second operational information and/or second flow information after training the model using the first operational information and the first flow information. In some implementations, the second operational information and/or the second flow information may relate to the first set of network devices 220. For example, the second operational information and/or the second flow information may identify a changed condition of the first set of network devices 220, updated information relating to the first set of network devices 220, and/or the like. Additionally, or alternatively, the second operational information and/or second flow information may relate to a second set of network devices 220 other than the first set of network devices 220. For example, the second operational information and/or second flow information may relate to network devices 220 of a different network than the first set of network devices 220. In other words, the modelling techniques described herein can be used to train a model with regard to a first set of network devices 220, and the model can be used to determine path information and/or predicted performance information for a second set of network devices 220.

In some implementations, the second operational information may relate to a changed configuration or operational status of one or more network devices 220. For example, a network device 220 may encounter a fault, and the second operational information may identify the network device 220 associated with the fault. Additionally, or alternatively, when a capacity of a network device 220 changes, the second operational information may identify the changed capacity. Additionally, or alternatively, the second operational information may relate to any other modification of any operational information parameter described herein.

In some implementations, the second flow information may relate to one or more traffic flows associated with the first flow information. For example, if a flow rate, CoS requirement, or SLA associated with a traffic flow has changed, network administration device 210 may receive or obtain second flow information identifying the changed parameter. Additionally, or alternatively, if one or more dropped flows are no longer to be processed by network administration device 210, or if one or more added flows are to be added to a group of flows managed by network administration device 210, the second flow information may identify the one or more dropped flows and/or the one or more added flows.

In some implementations, the second operational information and/or flow information may relate to a predicted network condition, such as a predicted outage or a predicted fault. For example, the model may indicate that a particular condition of operational information and/or flow information typically precedes a fault associated with a particular network device 220. When network administration device 210 detects the particular condition, network administration device 210 may determine that the fault is likely to occur. In such a case, network administration device 210 may determine second operational information and/or second flow information identifying the fault, and may use the second operational information and/or second flow information to identify an updated (e.g., optimized, improved, etc.) path to avoid the fault associated with the particular network device 220.

As further shown in Fig. 5, process 500 may include determining path information for the first set of traffic flows or a second set of traffic flows using the model and based on the second operational information and/or the second flow information (block 550). For example, network administration device 210 may determine path information using the model and based on the second operational information and/or the second flow information. The path information may identify an updated path (e.g., an improved path, an optimized path, etc.) for one or more traffic flows. For example, the path information may identify one or more updated paths for the first set of traffic flows associated with the first flow information and/or the second flow information. Additionally, or alternatively, when the second flow information relates to a second set of traffic flows other than the first set of traffic flows, the path information may identify one or more updated paths for the second set of traffic flows.

In some implementations, the path information may identify paths for multiple, different traffic flows. For example, network administration device 210 (or a set of network devices 220) may need to satisfy SLAs for multiple, different traffic flows, and may therefore need to determine paths that satisfy the SLAs for the multiple different traffic flows. This may be a particularly challenging problem due to the constantly changing nature of the network devices 220 and/or the links between the network devices 220. By using the machine learning technique to generate and update the model, network administration device 210 may enable adaptation to changing network conditions. Further, using a data-driven and rigorous approach to identify a routing protocol for a set of network devices 220 may improve network throughput, reliability, and satisfaction of SLAs for the traffic flows.

As further shown in Fig. 5, process 500 may include configuring the first set of network devices or the second set of network devices to implement the path information (block 560). For example, network administration device 210 may configure the first set of network devices 220 or the second set of network devices 220 (e.g., whichever set of network devices 220 is associated with the second operational information and/or second flow information) to implement the path information. In some implementations, network administration device 210 may transmit instructions to the network devices 220 to implement the path information. For example, network administration device 210 may use PCEP or a similar protocol to update routing information stored by the network devices 220. Additionally, or alternatively, network administration device 210 may update labels (e.g., multiprotocol label switching (MPLS) labels, and/or the like) associated with the traffic flows to cause the path information to be updated.

In some implementations, network administration device 210 may perform another action. For example, network administration device 210 may activate or deactivate one or more network devices 220 and/or one or more links. Additionally, or alternatively, network administration device 210 may notify an entity associated with a traffic flow that an SLA may be violated. Additionally, or alternatively, network administration device 210 may cause one or more traffic flows to be dropped (e.g., to preserve a more stringent SLA associated with another traffic flow). Additionally, or alternatively, network administration device 210 may reconfigure one or more network devices 220. Additionally, or alternatively, network administration device 210 may dispatch a technician to address a fault or black-holing incident associated with network devices 220.

As further shown in Fig. 5, process 500 may include updating the model based on the machine learning technique and based on observations after the path information is implemented (block 570). For example, network administration device 210 may update the model based on the machine learning technique (e.g., using a supervised learning technique or an unsupervised learning technique). Network administration device 210 may update the model using information obtained after the path information is implemented. For example, network administration device 210 may determine observed performance information (e.g., based on feedback from network device 220, etc.), and may compare the observed performance information to expected performance information outputted by the model. Based on comparing the observed performance information and the expected performance information, network administration device 210 may update or refine the model. Thus, network administration device 210 may improve accuracy of the model.

By updating the model based on changing network conditions, network administration device 210 may enable adaptation of the model over time to improve accuracy of the model and to account for changes in network topology. This may provide advantages over statically defined routing protocols, which may require manual intervention to update, and which may provide inferior accuracy and efficiency in comparison to models generated using machine learning techniques. Furthermore, implementations described herein may provide particular benefits in the case of traffic black-holing, which may not be adequately addressed by statically defined routing protocols. By dynamically updating the model, impact of black-holing incidents may be reduced or negated.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

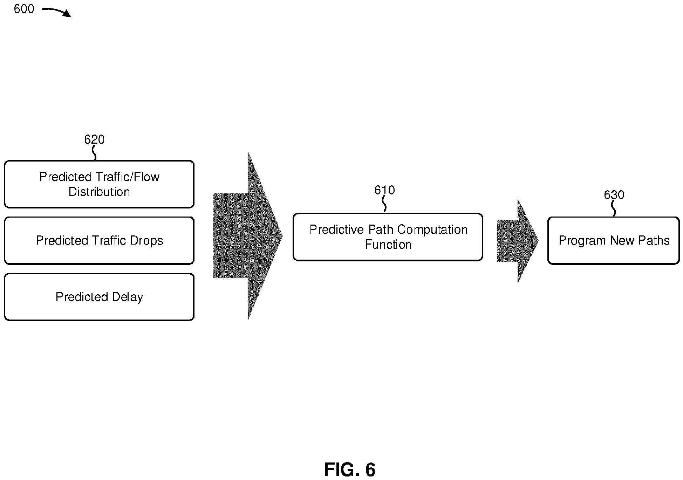

Fig. 6 is a diagram of an example 600 of inputs and outputs of a predictive path computation function 610, such as implementations described herein. For example, the predictive path computation function 610 may include or be included in one or more of the models or algorithms described herein.

The predictive path computation function 610 may receive inputs 620. As one example, an input 620 may include a predicted traffic distribution or a predicted flow distribution. For example, the predicted traffic distribution or the predicted flow distribution may be determined based on indicators such as a per-flow input rate, a per-flow output rate, a packets-per-second flow rate, and/or the like, and/or based on measurements such as a throughput, a flow statistic, and/or the like. As another example, an input 620 may identify predicted traffic drops. For example, the predicted traffic drops may be determined based on indicators such as a queue length, a resource utilization, a per-flow input or output rate (e.g., in packets per second) and/or based on measurements such as a number of traffic drops, a delay measurement (e.g., a timestamp based delay measurement), throughput and flow statistics, and/or the like. As another example, an input 620 may identify predicted delay. For example, the predicted delay may be determined based on an indicator such as a queue length, a measurement such as a timestamp based delay measurement, and/or the like.

The predictive path computation function 610 may determine and provide an output 620. For example, the output 620 may identify a new path to be programmed for traffic associated with a network. Additionally, or alternatively, the output 620 may include protocol information to cause the new path to be programmed or implemented. For a more detailed description of an example of such a process, refer to Figs. 1A-1D, above.

As indicated above, Fig. 6 is provided as an example. Other examples are possible, and may differ from what is described with regard to Fig. 6.

Therefore, from one perspective, there has been described that a network administration device may include one or more processors to receive operational information regarding a plurality of network devices; receive flow information relating to at least one traffic flow; input the flow information to a model, where the model is generated based on a machine learning technique, and where the model is configured to identify predicted performance information of one or more network devices with regard to the at least one traffic flow based on the operational information; determine path information for the at least one traffic flow with regard to the one or more network devices based on the predicted performance information; and/or configure the one or more network devices to implement the path information for the traffic flow.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A method (500), comprising:
receiving, by a network administration device (102, 210), operational information regarding a plurality of network devices (104, 220), the operational information including information identifying drops, delays, throughput statistics, a queue length, resource allocation, input rate and/or output rate for one or more network devices;
receiving, by the network administration device, flow information relating to a traffic flow that is transmitted or received via at least one network device of the plurality of network devices;
inputting, by the network administration device, the operational information and the flow information to a path selection model,
where the path selection model is generated based on a machine learning technique, and
where the path selection model is configured to identify predicted performance of the plurality of network devices with regard to the traffic flow based on the operational information and the flow information;
determining, by the network administration device, path information for the traffic flow with regard to the plurality of network devices based on the predicted performance of the plurality of network devices, wherein the path information identifies an updated path for the traffic flow using the path selection model and based on the predicted performance information; and
configuring, by the network administration device, one or more of the plurality of network devices to implement the updated path for the traffic flow.

2. The method of claim 1, further comprising:
updating the model, using the machine learning technique, based on comparing the predicted performance to an observed performance after the path information is implemented.

3. The method of any one of the preceding claims, where the predicted performance of the plurality of network devices is further based on a network topology of the plurality of network devices.

4. The method of any one of the preceding claims, where the operational information is first operational information and the flow information is first flow information; and
where the method further comprises:
receiving second operational information and/or second flow information for the plurality of network devices based on a change relating to the plurality of network devices; and
determining modified path information for the plurality of network devices using the model and based on the second operational information and/or the second flow information.

5. The method of any one of the preceding claims, where the flow information includes at least one of:
a service level agreement associated with the traffic flow,
information identifying the traffic flow, or
at least one attribute of the traffic flow.

6. The method of any one of the preceding claims, where the path information is associated with a plurality of traffic flows.

7. The method of any one of the preceding claims, where the path information identifies one or more paths, via the at least one of the plurality of network devices, for the traffic flow.

8. A computer program product comprising machine executable instructions residing on computer readable media, which, when loaded and executed by a processor, cause the processor to perform operations according to the method of any one of claims 1-7.

9. A network administration device (102, 210), comprising:
one or more processors to:
receive operational information regarding a plurality of network devices (104, 220), the operational information including information identifying drops, delays, throughput statistics, a queue length, resource allocation, input rate and/or output rate for one or more network devices;
receive flow information relating to at least one traffic flow that is transmitted or received via at least one network device of the plurality of network devices;
input the flow information to a path selection model,
where the path selection model is generated based on a machine learning technique, and
where the path selection model is configured to identify predicted performance information of one or more network devices with regard to the at least one traffic flow based on the operational information;
determine path information for the at least one traffic flow with regard to the one or more network devices based on the predicted performance information, wherein the path information identifies an updated path for the traffic flow using the path selection model and based on the predicted performance information; and
configure the one or more network devices to implement the updated path for the traffic flow.

10. The network administration device of claim 9, where the one or more network devices are included in the plurality of network devices.

11. The network administration device of any one of claims 9-10, where the one or more processors are further to:
update the model, using the machine learning technique, based on comparing the predicted performance information to observed performance information after the path information is implemented.

12. The network administration device of any one of claims 9-11, where the path information is determined based on a condition detected with regard to the one or more network devices.

13. The network administration device of claim 12, where the condition relates to at least one of:
a hardware fault,
a configuration fault,
dropped traffic,
a change in network topology of the one or more network devices, or
a traffic black-holing condition.

14. The network administration device of any one of claims 9-13, where the path information is determined based on one or more service level agreements associated with the at least one traffic flow.

## Patentansprüche

1. Verfahren (500), Folgendes umfassend:
Empfangen von Betriebsinformationen bezüglich einer Mehrzahl von Netzwerkgeräten (104, 220) durch ein Netzwerkadministrationsgerät (102, 210), wobei die Betriebsinformationen Informationen beinhalten, die Verluste, Verzögerungen, Durchsatzstatistiken, eine Warteschlangenlänge, Ressourcenzuweisung, Eingaberate und/oder Ausgaberate für ein oder mehrere Netzwerkgeräte beinhalten,
Empfangen von Flussinformationen bezüglich eines Verkehrsflusses, der über mindestens ein Netzwerkgerät der Mehrzahl von Netzwerkgeräten übertragen oder empfangen wird, durch das Netzwerkadministrationsgerät,
Eingeben der Betriebsinformationen und der Flussinformationen in ein Wegeauswahlmodell durch das Netzwerkadministrationsgerät,
wobei das Wegeauswahlmodell basierend auf einer Technik maschinellen Lernens erzeugt wird und
wobei das Wegeauswahlmodell dafür konfigurier ist, eine vorhergesagte Leistung der von Netzwerkgeräten bezüglich des Verkehrsflusses basierend auf den Betriebsinformationen und den Flussinformationen zu identifizieren,
Bestimmen von Wegeinformationen für den Verkehrsfluss bezüglich der Mehrzahl von Netzwerkgeräten basierend auf der vorhergesagten Leistung der Mehrzahl von Netzwerkgeräten durch das Netzwerkadministrationsgerät, wobei die Wegeinformationen mit Hilfe des Wegeauswahlmodells und basierend auf den Informationen zur vorhergesagten Leistung einen aktualisierten Weg für den Verkehrsfluss identifizieren, und
Konfigurieren eines oder mehrerer der Mehrzahl von Netzwerkgeräten durch das Netzwerkadministrationsgerät, um den aktualisierten Weg für den Verkehrsfluss umzusetzen.

2. Verfahren nach Anspruch 2, ferner Folgendes umfassend:
Aktualisieren des Modells mit Hilfe der Technik maschinellen Lernens basierend auf einem Vergleichen der vorhergesagten Leistung mit einer beobachteten Leistung nach dem Umsetzen der Wegeinformationen.

3. Verfahren nach einem der vorhergehenden Ansprüche, wobei die vorhergesagte Leistung der Mehrzahl von Netzwerkgeräten ferner auf einer Netzwerktopologie der Mehrzahl von Netzwerkgeräten basiert.

4. Verfahren nach einem der vorhergehenden Ansprüche, wobei die Betriebsinformationen erste Betriebsinformationen sind und die Flussinformationen erste Flussinformationen sind und
wobei das Verfahren ferner Folgendes umfasst:
Empfangen zweiter Betriebsinformationen und/oder zweiter Flussinformationen für die Mehrzahl von Netzwerkgeräten basierend auf einer Veränderung bezüglich der Mehrzahl von Netzwerkgeräten und
Bestimmen modifizierter Wegeinformationen für die Mehrzahl von Netzwerkgeräten mit Hilfe des Modells und basierend auf den zweiten Betriebsinformationen und/oder den zweiten Flussinformationen.

5. Verfahren nach einem der vorhergehenden Ansprüche, wobei die Flussinformationen mindestens eines des Folgenden beinhalten:
einer Dienstgütevereinbarung, die mit dem Verkehrsfluss in Verbindung steht,
Informationen, die den Verkehrsfluss identifizieren, oder
mindestens ein Attribut des Verkehrsflusses.

6. Verfahren nach einem der vorhergehenden Ansprüche, wobei die Wegeinformationen mit einer Mehrzahl von Verkehrsflüssen in Verbindung stehen.

7. Verfahren nach einem der vorhergehenden Ansprüche, wobei die Wegeinformationen für den Verkehrsfluss einen oder mehrere Wege über das mindestens eine der Mehrzahl von Netzwerkgeräten identifizieren.

8. Computerprogrammprodukt, maschinenausführbare Anweisungen umfassend, die sich auf computerlesbaren Medien befinden und die, wenn sie von einem Prozessor geladen und ausgeführt werden, den Prozessor veranlassen, Operationen gemäß dem Verfahren nach einem der Ansprüche 1 bis 7 durchzuführen.

9. Netzwerkadministrationsgerät (102, 210), Folgendes umfassend:
einen oder mehrere Prozessoren zum:
Empfangen von Betriebsinformationen bezüglich einer Mehrzahl von Netzwerkgeräten (104, 220), wobei die Betriebsinformationen Informationen beinhalten, die Verluste, Verzögerungen, Durchsatzstatistiken, eine Warteschlangenlänge, Ressourcenzuweisung, Eingaberate und/oder Ausgaberate für ein oder mehrere Netzwerkgeräte beinhalten,
Empfangen von Flussinformationen bezüglich eines Verkehrsflusses, der über mindestens ein Netzwerkgerät der Mehrzahl von Netzwerkgeräten übertragen oder empfangen wird,
Eingeben der Flussinformationen in ein Wegeauswahlmodell,
wobei das Wegeauswahlmodell basierend auf einer Technik maschinellen Lernens erzeugt wird und
wobei das Wegeauswahlmodell dafür konfigurier ist, Informationen zur vorhergesagten Leistung von einem oder mehreren Netzwerkgeräten bezüglich des mindestens einen Verkehrsflusses basierend auf den Betriebsinformationen zu identifizieren,
Bestimmen von Wegeinformationen für den mindestens einen Verkehrsfluss bezüglich des einen oder der mehreren Netzwerkgeräte basierend auf den Informationen zur vorhergesagten Leistung, wobei die Wegeinformationen mit Hilfe des Wegeauswahlmodells und basierend auf den Informationen zur vorhergesagten Leistung einen aktualisierten Weg für den Verkehrsfluss identifizieren, und
Konfigurieren des einen oder der mehreren Netzwerkgeräte, um den aktualisierten Weg für den Verkehrsfluss umzusetzen.

10. Netzwerkadministrationsgerät nach Anspruch 9, wobei das eine oder die mehreren Netzwerkgeräte in der Mehrzahl von Netzwerkgeräten enthalten sind.

11. Netzwerkadministrationsgerät nach einem der Ansprüche 9 bis 10, wobei der eine oder die mehreren Prozessoren ferner für Folgendes vorgesehen sind:
Aktualisieren des Modells mit Hilfe der Technik maschinellen Lernens basierend auf einem Vergleichen der Informationen zur vorhergesagten Leistung mit Informationen zur beobachteten Leistung nach dem Umsetzen der Wegeinformationen.

12. Netzwerkadministrationsgerät nach einem der Ansprüche 9 bis 11, wobei die Wegeinformationen basierend auf einer Bedingung bestimmt werden, die bezüglich des einen oder der mehreren Netzwerkgeräte erkannt wird.

13. Netzwerkadministrationsgerät nach Anspruch 12, wobei die Bedingung mindestens eines des Folgenden betrifft:
einen Hardware-Fehler,
einen Konfigurationsfehler,
Verkehrsverlust,
eine Veränderung der Netzwerktopologie des einen oder der mehreren Netzwerkgeräte oder
eine Verkehrs-Blackholing-Bedingung.

14. Netzwerkadministrationsgerät nach einem der Ansprüche 9 bis 13, wobei die Wegeinformationen basierend auf einer oder mehreren Dienstgütevereinbarungen bestimmt werden, die mit dem mindestens einen Verkehrsfluss in Verbindung stehen.

## Revendications

1. Procédé (500), comprenant :
la réception, par un dispositif d'administration de réseau (102, 210), d'informations de fonctionnement concernant une pluralité de dispositifs de réseau (104, 220), les informations de fonctionnement incluant des informations identifiants des chutes, des retards, des statistiques de débit, une longueur de file d'attente, une allocation de ressources, un débit d'entrée et/ou un débit de sortie pour un ou plusieurs dispositifs de réseau ;
la réception, par le dispositif d'administration de réseau, d'informations de flux relatives à un flux de trafic qui est transmis ou reçu via au moins un dispositif de réseau de la pluralité de dispositifs de réseau ;
l'introduction, par le dispositif d'administration de réseau, des informations de fonctionnement et des informations de flux dans un modèle de sélection de chemin,
le modèle de sélection de chemin étant généré à partir d'une technique d'apprentissage automatique, et
le modèle de sélection de chemin étant configuré pour identifier des performances prédites de la pluralité de dispositifs de réseau concernant le flux de trafic sur la base des informations de fonctionnement et des informations de flux ;
la détermination, par le dispositif d'administration de réseau, d'informations de chemin pour le flux de trafic concernant la pluralité de dispositifs de réseau à partir des performances prédites de la pluralité de dispositifs de réseau, les informations de chemin identifiant un chemin mis à jour pour le flux de trafic au moyen du modèle de sélection de chemin et sur la base des informations de performances prédites ; et
la configuration, par le dispositif d'administration de réseau, d'un ou plusieurs de la pluralité de dispositifs de réseau pour mettre en oeuvre le chemin mis à jour pour le flux de trafic.

2. Procédé selon la revendication 2, comprenant en outre :
la mise à jour du modèle, au moyen de la technique d'apprentissage automatique, sur la base d'une comparaison entre les performances prédites et des performances observées après la mise en oeuvre des informations de chemin.

3. Procédé selon l'une quelconque des revendications précédentes, dans lequel les performances prédites de la pluralité de dispositifs de réseau sont en outre basées sur une topologie de réseau de la pluralité de dispositifs de réseau.

4. Procédé selon l'une quelconque des revendications précédentes, dans lequel les informations de fonctionnement sont des premières informations de fonctionnement et les informations de flux sont des premières informations de flux ; et
le procédé comprenant en outre :
la réception de deuxièmes informations de fonctionnement et/ou de deuxièmes informations de flux pour la pluralité de dispositifs de réseau lors d'un changement concernant la pluralité de dispositifs de réseau ; et
la détermination d'informations de chemin modifié pour la pluralité de dispositifs de réseau au moyen du modèle et à partir des deuxièmes informations de fonctionnement et/ou des deuxièmes informations de flux.

5. Procédé selon l'une quelconque des revendications précédentes, dans lequel les informations de flux incluent au moins l'un parmi :
un accord de niveau de service associé au flux de trafic,
des informations identifiant le flux de trafic, ou
au moins un attribut du flux de trafic.

6. Procédé selon l'une quelconque des revendications précédentes, dans lequel les informations de flux sont associées à une pluralité de flux de trafic.

7. Procédé selon l'une quelconque des revendications précédentes, dans lequel les informations de flux identifient un ou plusieurs chemins, via l'au moins un dispositif de réseau de la pluralité de dispositifs de réseau, pour le flux de trafic.

8. Produit de programme informatique comprenant des instructions exécutables par machine résidant sur un support lisible par ordinateur qui, lorsqu'elles sont chargées et exécutées par un processeur, amènent le processeur à exécuter les opérations selon le procédé de l'une quelconque des revendications 1 à 7.

9. Dispositif d'administration de réseau (102, 210), comprenant :
un ou plusieurs processeurs pour :
recevoir des informations de fonctionnement concernant une pluralité de dispositifs de réseau (104, 220), les informations de fonctionnement incluant des informations identifiants des chutes, des retards, des statistiques de débit, une longueur de file d'attente, une allocation de ressources, un débit d'entrée et/ou un débit de sortie pour un ou plusieurs dispositifs de réseau ;
recevoir des informations de flux relatives à au moins un flux de trafic qui est transmis ou reçu via au moins un dispositif de réseau de la pluralité de dispositifs de réseau ;
introduire les informations de flux dans un modèle de sélection de chemin,
le modèle de sélection de chemin étant généré à partir d'une technique d'apprentissage automatique, et
le modèle de sélection de chemin étant configuré pour identifier des informations de performances prédites d'un ou plusieurs dispositifs de réseau concernant l'au moins un flux de trafic sur la base des informations de fonctionnement ;
déterminer des informations de chemin pour l'au moins un flux de trafic concernant lesdits un ou plusieurs dispositifs de réseau sur la base des informations de performances prédites, les informations de chemin identifiant un chemin mis à jour pour le flux de trafic au moyen du modèle de sélection de chemin et sur la base des informations de performances prédites ; et
configurer lesdits un ou plusieurs dispositifs de réseau pour mettre en oeuvre le chemin mis à jour pour le flux de trafic.

10. Dispositif d'administration de réseau selon la revendication 9, dans lequel lesdits un ou plusieurs dispositifs de réseau sont inclus dans la pluralité de dispositifs de réseau.

11. Dispositif d'administration de réseau selon l'une quelconque des revendications 9 à 10, dans lequel lesdits un ou plusieurs processeurs sont en outre destinés à :
mettre à jour le modèle, au moyen de la technique d'apprentissage automatique, sur la base d'une comparaison entre les informations de performances prédites et des informations de performances observées après la mise en oeuvre des informations de chemin.

12. Dispositif d'administration de réseau selon l'une quelconque des revendications 9 à 11, dans lequel les informations de chemin sont déterminées en fonction d'une condition détectée concernant lesdits un ou plusieurs dispositifs de réseau.

13. Dispositif d'administration de réseau selon la revendication 12, dans lequel la conditions est relative à au moins l'un parmi :
une défaillance matérielle,
une défaillance de configuration,
une chute de trafic,
un changement de topologie de réseau desdits un ou plusieurs dispositifs de réseau, ou
une condition de blocage du trafic.

14. Dispositif d'administration de réseau selon l'une quelconque des revendications 9 à 13, dans lequel les informations de chemin sont déterminées en fonction d'un ou plusieurs accords de niveau de service associés à l'au moins un flux de trafic.
